Europäisches Patentamt

European Patent Office

Office européen des brevets

(19)

(11) Veröffentlichungsnummer : **0 652 118 A1**

(12) **EUROPÄISCHE PATENTANMELDUNG**

(21) Anmeldenummer : **94890165.7**

(22) Anmeldetag : **11.10.94**

(51) Int. Cl.$^6$ : **B60C 9/20,** B60C 3/04

(30) Priorität : **08.11.93 AT 2260/93**

(43) Veröffentlichungstag der Anmeldung :
**10.05.95 Patentblatt 95/19**

(84) Benannte Vertragsstaaten :
**AT DE ES FR GB IT LU**

(71) Anmelder : **Semperit Reifen
Aktiengesellschaft
Wienersdorferstrasse 20-24
A-2514 Traiskirchen (AT)**

(72) Erfinder : **Drosg, Wolfgang, Dipl.-Ing.
Färbermühlgasse 13/1/11
A-1230 Wien (AT)**
Erfinder : **Zeiner, Paul, Dipl.-Ing.
Johann-Strauss-Gasse 11
A-3001 Mauerbach (AT)**
Erfinder : **Stumpf, Horst, Dipl.-Ing.
Oberer Föhrenhang Nr. 3
A-2551 Enzesfeld (AT)**

(74) Vertreter : **Vinazzer, Edith et al
Semperit Reifen Aktiengesellschaft
Patentabteilung
Wienersdorferstrasse 20-24
A-2514 Traiskirchen (AT)**

(54) **Reifen.**

(57) Die Erfindung betrifft einen PKW-Reifen mit einem deutlich herabgesetzten Gewicht und guten Komforteigenschaften. Dazu wird die Gürtelbreite zwischen 60 und 80 % der Breite des Reifens in der Bodenaufstandsfläche, die Seitenwanddicke $\leqq 2$ mm und die Fadendichte der Korde in den Gürtellagen zwischen 30 und 70 gewählt. Die Kernprofile in den Wulstbereichen besitzen eine geringe Shore Härte A und eine hohe Rückprallelastizität.

Fig.1

Fig.2

EP 0 652 118 A1

EP 0 652 118 A1

Die vorliegende Erfindung betrifft einen PKW-Reifen in Radialbauart, welcher Reifen einen Laufstreifen, ein Paar von Seitenwänden, ein Paar von Wulstbereichen mit Wulstkernen und Kernprofilen, eine insbesondere einlagige Karkasse, einen Gürtel mit mindestens zwei Gürtellagen, in welchen jeweils parallel verlaufende Stahlkorde angeordnet sind, wobei die Stahlkorde in diesen beiden Lagen einander kreuzen, aufweist.

Die Anforderungen, die an moderne PKW-Reifen gestellt werden, sind hoch. PKW-Reifen sollen einen möglichst geringen Rollwiderstand aufweisen, um den Treibstoffverbrauch von Kraftfahrzeugen zu senken. Sie sollen ferner ein möglichst geringes Gewicht haben, was sich auf das Gesamtgewicht des Fahrzeuges auswirkt und nicht nur zu einer Verringerung des Treibstoffverbrauches sondern auch zu einer Reduzierung von ungefederten Massen am Fahrzeug beiträgt, was sich insbesondere günstig auf den Komfort und andere Fahrzeugreifeneigenschaften auswirkt. Ein weiterer, immer wichtiger werdender Aspekt ist eine möglichst geringe Lärmbelastung der Bevölkerung durch den Kraftfahrzeugverkehr, so daß auch Maßnahmen getroffen werden sollen, die das Vorbeifahrgeräusch von abrollenden Reifen herabsenken. Darüberhinaus muß gewährleistet sein, daß die sonstigen Reifeneigenschaften, wie beispielsweise Geradeauslaufstabilität, Ansprechen auf Lenkkräfte, Fahrkomfort, Naßgriff usw. zumindest gleichermaßen erhalten bleiben. Es bestehen jedoch ausgeprägte Vorurteile in der Fachwelt, uns zwar dahingehend, daß konstruktive Maßnahmen am Reifenaufbau, die grundsätzlich eine Gewichtsreduktion bewirken würden nicht oder nur beschränkt setzbar sind, da die erforderliche Haltbarkeit und Sicherheit solcher Reifen nicht mehr gewährleistet wäre und darüberhinaus unakzeptable Einbußen im Fahrkomfort zu erwarten wären.

Die Erfindung hat sich nun die Aufgabe gestellt, einen Reifen der eingangs genannten Art derart zu gestalten, daß er einerseits gegenüber einem herkömmlichen Reifen gleicher Dimensionierung ein deutlich verringertes Gewicht aufweist, im Rollwiderstand verbessert ist, im Vorbeifahrgeräusch günstiger ist, hinsichtlich seiner sonstigen Eigenschaften voll befriedigt und darüberhinaus bezüglich seines inneren Gleichgewichtes derart harmonisch abgestimmt ist, daß auch ein sehr guter Fahrkomfort gewährleistet ist.

Gelöst wird die gestellte Aufgabe erfindungsgemäß dadurch, daß die Breite des Gürtels zwischen 60 und 80 % der Breite des Laufstreifens in der Bodenaufstandsfläche beträgt, daß die Dicke der Seitenwände $\leqq 2,0$ mm ist, daß die Stahlkorde in den Gürtellagen eine Fadendichte zwischen 30 und 70 Korden pro 10 cm aufweisen, und daß die Kernprofile in den Wulstbereichen eine Shore Härte A zwischen 50 bis 75, insbesondere $\leqq 70$, und eine Rückprallelastizität bei Raumtemperatur $\geqq 40$ %, insbesondere $\geqq 45$ % aufweisen.

In Summe können die genannten Maßnahmen zu einer Gewichtsreduktion in der Größenordnung von mindestens 15 % beitragen. Bei entsprechender Abstimmung der einzelnen Bauteile aufeinander ist auch eine Gewichtsreduktion um 20 % oder mehr möglich. Durch die erfindungsgemäß ausgelegten Kernprofile werden weiche und vergleichsweise elastische Wulstbereiche geschaffen, die bei einem Reifen mit dünnen Seitenwänden und leichter Gürtelkonstruktion das innere Gleichgewicht des Reifenkörpers derart beeinflussen, daß die Hauptbauteile Gürtel, Seitenwände und Wulstbereiche zur Vermeidung bzw. weitgehenden Vermeidung von Biegespannungen im Reifenkörper aufeinander abgestimmt sind. Somit läßt sich durch die genannten Maßnahmen ein leichter Reifen schaffen, der im Fahrkomfort sehr gut entspricht.

Vorteilhafte Weiterentwicklungen und Ausgestaltungen der Erfindung sind in den Unteransprüchen enthalten.

Eine weitere Maßnahme, die zur erwähnten inneren Abstimmung des Reifenkörpers beiträgt besteht darin, daß der Karkasshochschlag bis auf eine Höhe reicht, die zwischen 5 und 15 % der Reifenhöhe beträgt.

Dabei ist es ferner günstig, wenn auch das Kernprofil relativ kurz bemessen ist und bis auf eine Höhe reicht, die zwischen 15 und 28 % der Reifenhöhe beträgt.

Aus Gewichtsgründen ist es dabei von Vorteil, wenn der Karkasshochschlag in einer Höhe $\leqq 12$ % der Reifenhöhe endet und das Kernprofil bis auf eine maximale Höhe reicht, die $\leqq 25$ % der Reifenhöhe beträgt. Es hat sich herausgestellt, daß dadurch weder der Komfort noch die Haltbarkeit des Reifens ungünstig beeinflußt werden.

Bei einer anderen Ausführungsvariante der Erfindung ist das freie Karkasslagenende nahezu zur Gänze um den Wulstkern zur Karkasslage selbst zurückgeführt, der Karkasshochschlag verläuft benachbart der Karkasslage. Diese Ausführungsform hat zusätzlich den Vorteil, daß das Karkassende nicht den sonst üblichen Belastungen ausgesetzt wird.

Eine spürbare Gewichtsreduktion macht sich dann bemerkbar, wenn die Breite des Gürtels zwischen 60 und 70 % der Breite des Laufstreifens in der Bodenaufstandsfläche gewählt wird. Die Schnellauffestigkeit des Reifens wird dadurch nicht beeinträchtigt, bei Gürtelbreiten unter 60 % könnten diesbezüglich Probleme auftreten.

Auch die Dicke der Seitenwände kann gegenüber herkömmlichen Reifen erheblich herabgesetzt werden. Dabei kann die Seitenwanddicke in einem Bereich zwischen 1,0 und 1,8 mm gewählt werden, was ebenfalls eine deutliche Gewichtsersparnis bringt und keine Auswirkungen auf die Reifenhaltbarkeit zeigt.

In den Gürtellagen werden insbesondere Stahlkorde verwendet, deren Zugfestigkeit zwischen 2.500 und

2

3.500 N/mm², vorzugsweise zwischen 2.700 und 3.300 N/mm², beträgt. Korde mit solchen Zugfestigkeitswerten tragen zur erforderlichen Gürtelhaltbarkeit bei.

Es kann ferner eine relativ geringe Fadendichte in den einzelnen Gürtellagen gewählt werden, die insbesondere ≦ 65 Korde pro 10 cm betragen kann.

Eine weitere Maßnahme, die zu einer Verringerung des Reifengewichtes beiträgt besteht darin, daß der Reifen mit einer Innenplatte versehen ist, die auf einer Kautschukmischung, die einen halogenierten Butylkautschuk enthält, basiert und eine Dicke ≦ 0,7 mm, insbesondere eine Dicke von 0,3 bis 0,4 mm, aufweist.

Für einen PKW-Reifen mit einem Speed-Symbol ≧ Q und einem Load Index ≧ 50 ist es ferner günstig. wenn das Verhältnis Load Index zu Fadenteilung zwischen1,2 und 3,2 ist Es hat sich herausgestellt, daß für solche Reifen die erforderliche Gürtelhaltbarkeit bzw. Tragfähigkeit des Gürtels dann sichergestellt ist, wenn das angegebene Verhältnis Load Index zu Fadendichte nicht unterschritten wird. Dabei sollte dieses Verhältnis insbesondere zwischen 1,25 und 2,2 betragen.

Weitere Merkmale, Vorteile und Einzelheiten der Erfindung werden nun anhand der Zeichnung, die zwei Ausführungsbeispiele darstellt, näher beschrieben. Dabei zeigt Fig. 1 schematisch einen Querschnitt durch die eine Hälfte eines nach der gegenständlichen Erfindung gestalteten Reifens, dessen zweite Hälfte gleich ausgeführt ist, Fig. 2 ein vergrößertes Detail aus dem Laufstreifen- bzw. Gürtelbereich dieses Reifens und Fig. 3 eine Variante der Wulstgestaltung.

Sämtliche erwähnten Abmessungen und Dimensionsangaben einzelner Reifenbauteile beziehen sich auf die Geometrie des Fertigreifens.

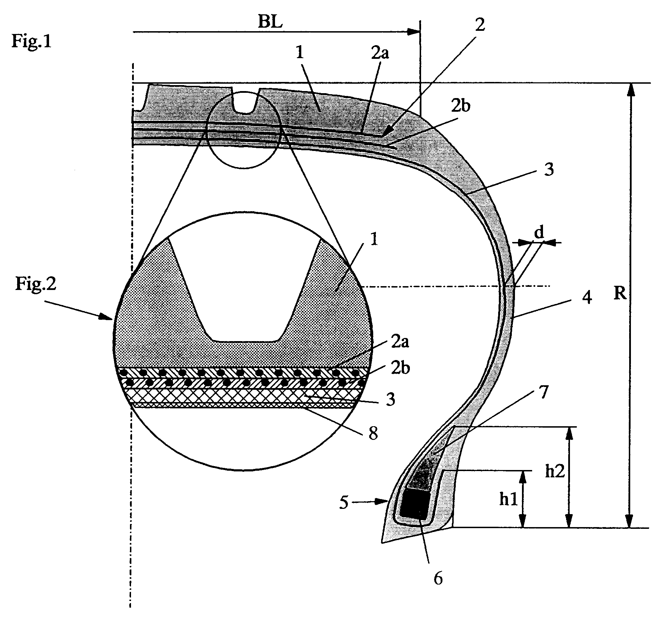

Der in Fig. 1 dargestellte Reifen umfaßt einen Laufstreifen 1, einen Gürtel 2, einen einlagige Karkasse 3, zwei Seitenwände 4, Wulstbereiche 5 mit Wulstkernen 6 und einem Kernprofil 7 und eine Innenplatte 8.

Eine Anzahl von Maßnahmen, die im folgenden näher beschrieben werden, tragen dazu bei, das Reifengewicht erheblich zu reduzieren.

Der Gürtel 2 besteht aus 2 Gürtellagen 2a, 2b, die Breite des Gürtels 2, gemessen an der seitlichen Erstreckung der breiteren Gürtellage 2b beträgt zwischen 60 und 80 %, insbesondere zwischen 63 und 67 %, der Breite BL des Reifens in der Bodenaufstandsfläche. Die Breite BL entspricht der größten Latschabdruckbreite, ermittelt mit einem Reifen, welcher auf seiner Normfelge aufgebracht ist, und sich unter Maximallast und zugehörigem Innendruck entsprechend E.T.R.T.O. Standards Manual befindet.

Die Gürtellagen 2a, 2b weisen Stahlkorde 12 auf, die in jeder Lage parallel zueinander verlaufen und relativ zur Umfangsrichtung des Reifens unter einem vergleichsweise kleinen Winkel von ca. 18 bis 28° verlaufen, wobei die Korde der beiden Lagen einander kreuzen. Die Stahlkorde 12 sind in eine Kautschukmischung eingebettet, deren Dicke zwischen 0,8 und 0,9 mm beträgt. Die Stahlkorde 12 besitzen eine Zugfestigkeit im Bereich zwischen 2.500 N/mm² bis 3.500 N/mm², insbesondere zwischen 2.700 N/mm² und 3.300 N/mm². Die Stahlkorde 12 bestehen aus zumindest einem Einzelfilament, mehrere Filamente können Stahlkord bestimmter Konstruktion ergeben, beispielsweise eine 1x2, 1x3 oder eine 2x2-Konstruktion. Aus Gewichts- und Festigkeitsgründen wird bevorzugt eine 1x2-Konstruktion eingesetzt, deren Filamente aus einem high tensile Stahl mit einem Kohlenstoffgehalt zwischen 0,8 bis 1 % bestehen. Es werden bevorzugt Filamente verwendet, deren Durchmesser zwischen 0,25 bis 0,35 mm, insbesondere 0,30 mm beträgt.

Es hat sich nun überraschenderweise herausgestellt, daß ein relativ breiter Kordabstand in den einzelnen Gürtellagen 2a, 2b gewählt werden kann, was aus Gewichtsgründen von Vorteil ist. So hat sich insbesondere herausgestellt, daß eine Fadendichte von 30 bis 70 Korden pro 10 cm, insbesondere von 50 bis 65 Korden pro 10 cm, keinerlei negative Auswirkungen auf die Gürtelhaltbarkeit zeigt.

Für Reifen mit einem Speed-Symbol ≧ Q und einem Load Index ≧ 50 (beides gemäß E.T.R.T.O. Standards Manual) hat sich als Maß für die Tragfähigkeit eines Reifens mit geringer Fadendichte im Rahmen der Erfindung das Verhältnis von Load Index zu Fadendichte herausgestellt, welches für Reifen, die einen Load Index ≧ 50 aufweisen, zwischen 1,2 und 3,2 sein sollte. Ein gut abstimmbarer Bereich bezüglich Lebensdauer und Haltbarkeit des Gürtels liegt bei Werten zwischen 1,25 und 2,2.

Eine weitere Gewichtsreduktion ist durch die Ausgestaltung der Seitenwände 4 realisierbar. Die Seitenwände 4 werden dünner ausgeführt als bei herkömmlichen Reifen, und haben eine Dicke d, gemessen an der Stelle des Reifens mit der größten Breite zwischen 1,0 bis 2,0 mm, insbesondere beträgt d zwischen 1,0 mm und 1,8 mm. Der Reifen ist ferner mit einer dünnen Innenplatte 8 versehen, die aus einer luftundurchlässigen Mischung, die beispielsweise auf einem halogenierten Butylkautschuk basiert, besteht. Die Innenplatte 8 weist eine Dicke, gemessen im Scheitel des Reifens, von ≦ 0,7 mm, insbesondere zwischen 0,3 und 0,4 mm, auf.

Die einlagige Karkasse 3 besteht bevorzugt aus einem Polyestergewebe, beispielsweise der Konstruktion 1440/2-100EPDm und umschlingt in den beiden Wulstbereichen 5 die Wulstkerne 6. Oberhalb der Wulstkerne 6, die herkömmliche Stahldrahtwulstkerne sein können, ist je ein im Querschnitt im wesentlichen dreieckförmiges Kernprofil 7 angeordnet. Um einerseits auch im Wulstbereich gewichtsreduzierende Maßnahmen zu setzen und um andererseits jedoch das Reifengleichgewicht im Gesamtkonzept eines möglichst leichten Reifens zu gewährleisten sind im Rahmen der vorliegenden Erfindung auch im Wulstbereich einige Maßnahmen gesetzt worden. So ist etwa der Karkasshochschlag 3a wesentlich kürzer ausgeführt als bei herkömmlich gebauten Reifen. Der Hochschlag 3a endet in einer Höhe h1, gemessen vom Eckpunktsdurchmesser der Felge gemäß E.T.R.T.O. Standards Manual, die zwischen 5 und 15 % der Reifenhöhe R beträgt. Das Kernprofil 7 reicht bis auf eine Höhe h2, vom selben Bezugspunkt wie h1 gemessen, die zwischen 15 und 28 % der Reifenhöhe R beträgt. Vorzugsweise ist h1 $\leqq$ 12 % R und h2 $\leqq$ 25 % R. In jedem Fall ist h2 $\geqq$ h1. Jedes Kernprofil selbst besteht ferner aus einer relativ weichen und elastischen Gummimischung. Die Shore-Härte A (gemäß DIN 53505) des Kernprofiles 7 beträgt zwischen 50 bis 75 und ist günstigerweise $\leqq$ 70, die Rückprallelastizität bei Raumtemperatur (gemäß DIN 53512) ist $\geqq$ 40 %, insbesondere $\geqq$ 45 %. Der kurze Hochschlag der Karkasse sowie das kurze Kernprofil und dessen weiche und elastische Gummimischung ergeben insgesamt einen weichen Wulstbereich 5, wodurch die wesentlichen Bauteile dieses Reifens, nämlich Laufstreifen mit Gürtel, Seitenwand und Wulstbereich derart aufeinander abgestimmt sind, daß unerwünschte Biegespannungen im gesamten Reifenkörper weitgehend vermieden werden. Die in den Wulstbereichen 5 gesetzten Maßnahmen wirken sich außerdem sehr günstig auf den Fahrkomfort aus, da dadurch gewährleistet ist, daß trotz eines insgesamt geringen Materialeinsatzes Einzelstöße, insbesondere durch Querfugen und dergleichen im Untergrund, gut absorbiert werden können.

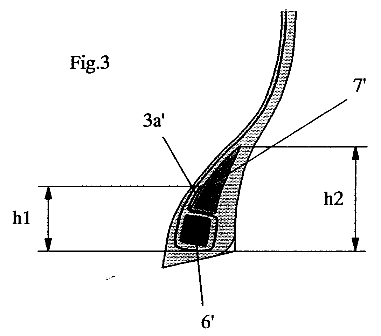

Eine Variante der Ausgestaltung des Wulstbereiches ist in Fig. 3 dargestellt. Dabei ist das freie Karkasslagenende 3'a nahezu komplett um den Wulstkern 6' herumgeführt, um über ein kurzes Stück wieder parallel zur Karkasslage und in unmittelbarer Nähe derselben zu verlaufen. Oberhalb des Wulstkernes, jedoch getrennt durch das um den Wulstkern 6' geschlagene freie Ende 3'a der Karkasse 3' ist ein Kernprofil 7' angeordnet. Die Werte für h1 und h2 entsprechen jenen gemäß dem Ausführungsbeispiel nach Fig. 1. Das Kernprofil 7' ist ferner günstigerweise ebenfalls aus einer Mischung gefertigt, deren Härte und Rückprallelastizität den bereits oben angegebenen Werten entsprechen.

Reifen der Dimension 175/70 R 13 wurden nach dem Konzept der gegenständlichen Erfindung gebaut und unterschiedlichen Tests unterworfen. Bei den Testreifen betrug die Gürtelbreite 67 % der Laufstreifenbreite BL, in den beiden Gürtellagen wurde als Festigkeitsträger ein Stahlkord der Konstruktion 2x0,30 mm in high tensile-Ausführung verwendet, die Fadendichte betrug 65 Korde/10 cm, die Seitenwanddicke d betrug 1,8 mm, die Höhe h1 des Karkasshochschlages 12 % von R und die Höhe h2 des Kernprofiles 24 % von R. Das Kernprofil wurde aus einer üblichen Kautschukmischung gefertigt, die Shore Härte A betrug 70, die Rückprallelastizität bei Raumtemperatur 42 %. Die Testreifen wurden einigen Prüfungen unterzogen und mit Reifen der gleichen Dimension, jedoch herkömmlichen Aufbau verglichen.

Getestet wurden jeweils der Rollwiderstand, die Dauerhaltbarkeit, die Schnellaufhaltbarkeit und das Vorbeifahrgeräusch unter folgenden Bedingungen:

Rollwiderstand: Messung des Antriebsmomentes auf einer 2m-Prüftrommel, Wert bei 60 km/h
Dauerhaltbarkeit: nach FMVSS 109 (Federal Motor Vehicle Safety Standard, USA)
Schnellaufhaltbarkeit: nach FMVSS 109
Vorbeifahrgeräusch: in Anlehnung an ISO R 362 (ohne Antrieb, Motor abgestellt)

Tabelle 1 zeigt die ermittelten Testergebnisse zweier Testreifen im Vergleich zu den Ergebnissen eines herkömmlichen Vergleichsreifens. Angegeben sind Kennzahlen, wobei die mit dem Vergleichsreifen ermittelten Werte gleich 100 gesetzt sind und Werte > 100 eine Verbesserung bedeuten.

Tabelle 1

## Reifen-Testergebnisse

| | Gewicht [kg] | Rollwiderstand | Schnellauf-festigkeit | Dauerhalt-barkeit | Vorbeifahr-geräusch |
|---|---|---|---|---|---|
| **Vergleichsreifen** | 6,8 | 100 | 100 | 100 | 100 |
| **Testreifen 1** | 5,4 | 121 | 95 | 95 | 107 |
| **Testreifen 2** | 5,4 | 120 | 96 | 98 | 107 |

EP 0 652 118 A1

**Patentansprüche**

1. PKW-Reifen in Radialbauart, welcher Reifen einen Laufstreifen, ein Paar von Seitenwänden, ein Paar von Wulstbereichen mit Wulstkernen und Kernprofilen, eine insbesondere einlagige Karkasse, einen Gürtel mit mindestens zwei Gürtellagen mit zwei Lagen, in welchen jeweils parallel verlaufende Stahlkorde angeordnet sind, wobei die Stahlkorde in diesen beiden Lagen einander kreuzen, aufweist, dadurch gekennzeichnet, daß die Breite des Gürtels (2) zwischen 60 und 80 % der Breite (BL) des Laufstreifens (1) in der Bodenaufstandsfläche beträgt, daß die Dicke (d) der Seitenwände (4) $\leqq$ 2,0 mm ist, daß die Stahlkorde in den Gürtellagen (2a, 2b) eine Fadendichte zwischen 30 und 70 Korden pro 10 cm aufweisen, und daß die Kernprofile (7, 7') in den Wulstbereichen (5) eine Shore Härte A zwischen 50 bis 75, insbesondere $\leqq$ 70, und eine Rückprallelastizität bei Raumtemperatur $\geqq$ 40 %, insbesondere $\geqq$ 45 %, aufweisen.

2. Reifen nach Anspruch 1, dadurch gekennzeichnet, daß der Karkasshochschlag (3a, 3'a) bis auf eine Höhe (h1) reicht, die zwischen 5 und 15 % der Reifenhöhe (R) beträgt.

3. Reifen nach Anspruch 1 oder Anspruch 2, dadurch gekennzeichnet, daß das Kernprofil (7, 7') bis auf eine Höhe reicht, die zwischen 15 und 28 % der Reifenhöhe beträgt.

4. Reifen nach Anspruch 2, dadurch gekennzeichnet, daß der Karkasshochschlag (3a, 3'a) in einer Höhe (h1) $\leqq$ 12 % der Reifenhöhe (R) endet.

5. Reifen nach Anspruch 3, dadurch gekennzeichnet, daß das Kernprofil (7, 7') bis auf eine maximale Höhe (h2) reicht, die $\leqq$ 25 % der Reifenhöhe (R) beträgt.

6. Reifen nach einem der Ansprüche 1 bis 5, dadurch gekennzeichnet, daß das freie Karkasslagenende (3'a) nahezu zur Gänze um den Wulstkern (6') zur Karkasslage (3') selbst zurückgeführt ist und der Karkasshochschlag (3'a) benachbart der Karkasslage verläuft.

7. Reifen nach einem der Ansprüche 1 bis 6, dadurch gekennzeichnet, daß die Breite des Gürtels (2) zwischen 60 und 70 % der Breite (BL) des Reifens in der Bodenaufstandsfläche beträgt.

8. Reifen nach einem der Ansprüche 1 bis 7, dadurch gekennzeichnet, daß die Dicke (d) der Seitenwände (4) zwischen 1,0 und 1,8 mm beträgt.

9. Reifen nach einem der Ansprüche 1 bis 8, dadurch gekennzeichnet, daß die Stahlkorde in den Gürtellagen (2a, 2b) eine Zugfestigkeit zwischen 2.900 und 3.500 N/mm$^2$ aufweisen.

10. Reifen nach einem der Ansprüche 1 bis 9, dadurch gekennzeichnet, daß die Fadendichte der Korde in den Gürtellagen (2a, 2b) $\leqq$ 65 beträgt.

11. Reifen nach einem der Ansprüche 1 bis 10, dadurch gekennzeichnet, daß der Reifen mit einer Innenplatte (8) versehen ist, die auf einer Kautschukmischung, die einen halogenierten Butylkautschuk enthält, basiert und eine Dicke $\leqq$ 0,7 mm, insbesondere eine Dicke von 0,3 bis 0,4 mm, aufweist.

12. Reifen mit einem Speed-Symbol $\geqq$ Q und einem Load Index $\geqq$ 50, nach einem der Ansprüche 1 bis 11, dadurch gekennzeichnet, daß das Verhältnis Load Index zu Fadenteilung zwischen 1,2 und 3,2 beträgt.

13. Reifen nach Anspruch 12, dadurch gekennzeichnet, daß das Verhältnis Load-Index zu Fadenteilung zwischen 1,25 und 2,2 beträgt.

Fig.1

Fig.2

BL

R

1

2

2a

2b

3

4

d

1

2a

2b

3

8

5

6

7

h1

h2

Fig.3

**Europäisches Patentamt**

# EUROPÄISCHER RECHERCHENBERICHT

Nummer der Anmeldung

EP 94 89 0165

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 554 108 (BRIDGESTONE CORP.)<br>* Seite 2, Spalte 30 - Seite 3, Spalte 15; Ansprüche; Abbildungen; Beispiele *<br>* Seite 4, Zeile 31 - Zeile 39 *<br>--- | 1,3,4,7 | B60C9/20<br>B60C3/04 |
| A | EP-A-0 317 636 (BRIDGESTONE CORP.)<br>* Seite 4; Ansprüche; Abbildungen; Tabellen *<br>--- | 1 | |
| A | GB-A-2 024 119 (UNIROYAL GMBH)<br>* Ansprüche; Abbildungen *<br>--- | 1 | |
| A | EP-A-0 128 852 (THE GOODYEAR TIRE & RUBBER CO.)<br>* Seite 5, Zeile 9 - Zeile 15; Ansprüche; Abbildungen *<br>* Seite 1, Zeile 23 - Zeile 26 *<br>--- | 1 | |
| A | EP-A-0 248 164 (THE FIRESTONE TIRE&RUBBER CO)<br>* Seite 9, Zeile 8 - Zeile 12; Ansprüche; Abbildungen; Tabelle 3 *<br>--- | 1 | RECHERCHIERTE SACHGEBIETE (Int.Cl.6) |
| A | US-A-5 027 877 (TAMURA ET AL.)<br>* Anspruch 4 *<br>----- | 1 | B60C |

Der vorliegende Recherchenbericht wurde für alle Patentansprüche erstellt

| Recherchenort | Abschlußdatum der Recherche | Prüfer |
|---|---|---|
| DEN HAAG | 21. Februar 1995 | Baradat, J-L |

EPO FORM 1503 03.82 (P04C00)